# FASCICULE DE BREVET EUROPEEN

(11) **EP 0 806 103 B1**
(45) Date de publication et mention de la délivrance du brevet: **17.04.2002**
(21) Numéro de dépôt: 96901844.9
(22) Date de dépôt: 24.01.1996
(51) Int. Cl.: H04M 3/20, H04M 3/42, H04M 1/57

(54) **INTERRUPTION D'UNE COMMUNICATION ENTRE DEUX TERMINAUX PAR UN APPEL D'UN AUTRE TERMINAL**
UNTERBRECHUNG EINER KOMMUNIKATIONSVERBINDUNG ZWISCHEN ZWEI ENDGERÄTEN
CALL INTERRUPTION BETWEEN TWO TERMINALS BY MEANS OF A CALL FROM A THIRD TERMINAL

(30) Priorité: 27.01.1995 FR 9500980
(43) Date de publication de la demande: 12.11.1997
(73) Titulaire: FRANCE TELECOM, 75015 Paris (FR); TELEDIFFUSION DE FRANCE, 75015 Paris (FR)
(72) Inventeur: LOUVEL, Bernard, F-35770 Vern-sur-Seiche (FR)
(74) Mandataire: Martinet & Lapoux
(86) Numéro de dépôt international: FR9600117
(87) Numéro de publication internationale: WO9623382

(56) Documents cités:
- DE-A- 3 315 884
- GB-A- 2 258 119
- US-A- 4 852 151
- IEEE COMMUNICATIONS MAGAZINE, vol. 31, no. 4, Avril 1993 US, pages 70-75, XP 000359826 BARRY K. SCHWARTZ 'THE ANALOG DISPLAY SERVICES INTERFACE'

## Description

La présente invention concerne l'interruption temporaire d'une communication entre des premier et second terminaux afin de transmettre par l'intermédiaire d'un équipement tel qu'un centre de commutation traversé par la communication entre les premier et second terminaux, des données au premier terminal avant de rétablir la communication. Les données à transmettre comprennent par exemple des caractères identifiant un troisième terminal appelant le premier terminal destinataire des données.

La présente invention concerne plus particulièrement une interruption temporaire d'une communication transitant par un réseau téléphonique analogique.

Selon un procédé connu, le centre de commutation qui dessert directement le premier terminal interrompt temporairement la communication entre les premier et second terminaux téléphoniques lorsque le centre de commutation reçoit un signal d'appel du troisième terminal. Puis le centre de commutation transmet un signal d'alerte d'usager au premier terminal téléphonique sous la forme d'un signal audible par l'usager du premier terminal.

Le centre de commutation transmet ensuite un signal d'alerte de terminal au premier terminal téléphonique. Ce dernier, s'il est conçu pour traiter le signal d'alerte de terminal, répond par un accusé de réception. Après avoir reçu l'accusé de réception, le centre de commutation transmet au terminal téléphonique impliqué un message de données, puis rétablit la communication momentanément interrompue entre les premier et second terminaux téléphoniques. Si le centre de commutation ne reçoit pas d'accusé de réception, il rétablit la communication entre les premier et second terminaux téléphoniques.

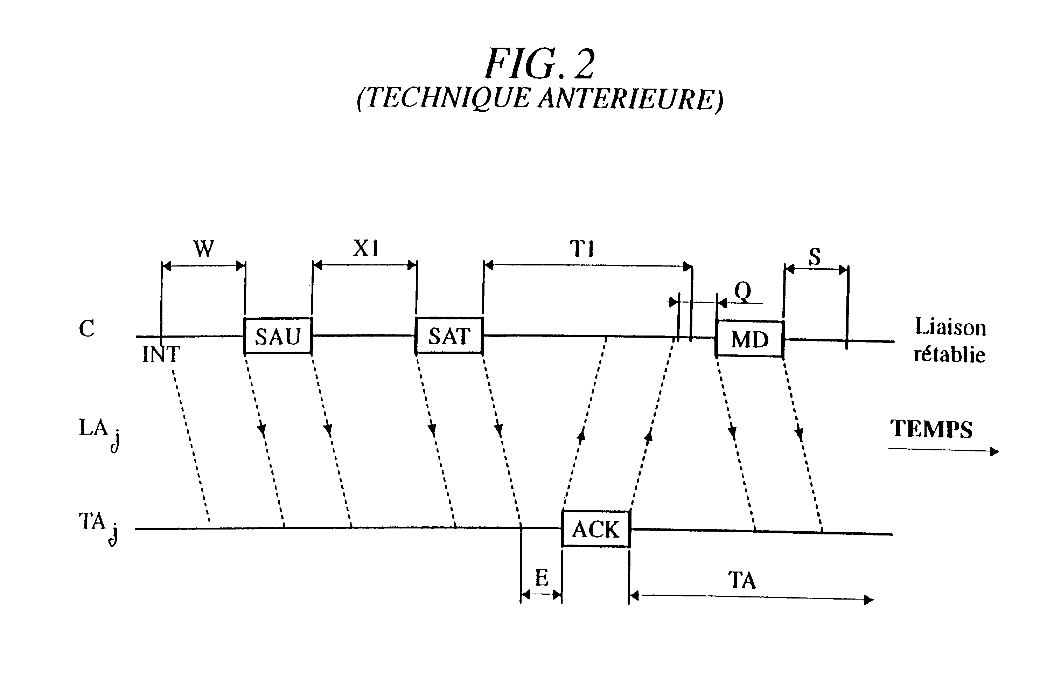

Ce procédé connu, décrit plus précisément dans la suite en référence à la figure 2, ne s'applique qu'à l'interruption de communications téléphoniques. Des communications télématiques, ou des communications mixtes, c'est-à-dire transmettant successivement de la parole et des données, sont perturbées par une interruption temporaire provoquée par le procédé connu.

Ces perturbations sont dues notamment à une reconnaissance à tort du signal d'alerte de terminal pendant la communication elle-même par le premier terminal, ou bien à un défaut de détection du signal d'alerte de terminal perturbé par des signaux transmis par le premier terminal. Ces perturbations sont également dues au fait que le premier ou le second terminal peut ne pas accepter une interruption pendant une durée suffisante.

Les conséquences de la perturbation sont notamment des ruptures définitives de communication télématique ou mixte, des non-détections et des détections erronées d'interruption temporaire.

Or, le centre de commutation ne distingue pas le type de la communication à interrompre, et doit pouvoir interrompre tout type de communication selon un seul procédé.

La présente invention vise à fournir un procédé d'interruption temporaire d'une communication, qui est compatible avec des communications télématiques et mixtes, tout en demeurant compatible avec des communications téléphoniques.

A cette fin, un procédé de gestion d'interruption d'une communication établie via une liaison analogique entre des premier et second terminaux à travers notamment un équipement traversé par la communication, qui provoque l'interruption, est mis en oeuvre dans le premier terminal. Le procédé est caractérisé en ce qu'il comprend l'étape de rechercher pendant une durée de recherche prédéterminée un motif transmis par l'équipement comprenant la succession :
d'un premier signal de silence, pendant une première durée de silence prédéterminée,
d'un signal d'alerte de terminal transmis par l'équipement, et
d'un second signal de silence pendant une seconde durée de silence prédéterminée,
chacun des premier et second signaux de silence ayant une puissance inférieure au niveau de puissance le plus faible des signaux échangés entre les premier et second terminaux dans la bande de fréquence desdits signaux échangés.

Les premier et second signaux de silence remédient à toute détection erronée du signal d'alerte de terminal puisque celui-ci est complètement séparé de tout autre signal, et ainsi facilitent la détection du signal d'alerte de terminal par rapport à la technique antérieure.

Selon une réalisation particulière, le procédé de gestion d'interruption selon lequel l'équipement interrompt la communication établie précédemment au signal d'alerte de terminal,
est caractérisé en ce qu'il comprend les étapes de :
- constater une interruption de la communication établie,
- vérifier un déclenchement d'une temporisation intermédiaire, successivement à l'étape de constater précédente,
- rechercher pendant une durée prédéterminée le signal d'alerte d'usager transmis par l'équipement, lorsque la temporisation intermédiaire n'est pas déclenchée,
- rechercher un signal modulant une fréquence porteuse prédéterminée transmis par le second terminal pendant une durée prédéterminée, après que le signal d'alerte d'usager recherché soit détecté, et
- déclencher la temporisation intermédiaire lorsque le signal modulant la fréquence porteuse prédéterminée a été détecté, et rompre la communication établie lorsque la signal modulant la fréquence porteuse recherché n'est pas détecté,
l'étape de rechercher le motif n'étant réalisée qu'après que la perte du signal modulant la fréquence porteuse prédéterminée soit constatée pendant la temporisation intermédiaire déclenchée.

Ainsi, selon cette réalisation, la recherche du motif est conditionnée par la réception préalable du signal d'alerte d'usager et suivie par une détection du signal modulant la fréquence porteuse prédéterminée.

Selon une variante de réalisation, le procédé de gestion d'interruption comprend, préalablement à l'étape de rechercher le motif, les étapes de :
- recevoir un signal d'alerte d'usager, et
- déclencher une temporisation correspondant à la durée de recherche prédéterminée.

Dans un autre aspect de l'invention, le procédé de gestion d'interruption comprend l'étape de déclencher une temporisation de déconnexion préalablement aux étapes de rechercher le signal d'alerte d'usager et de rechercher le motif. La temporisation de déconnexion est une durée maximale de perte du signal modulant la fréquence porteuse prédéterminée au-delà de laquelle le premier terminal rompt la communication établie. A l'issue de la temporisation de déconnexion, le premier terminal rétablit la communication avec le second terminal si le signal modulant la fréquence porteuse prédéterminée est retrouvé et si aucun signal d'alerte d'usager ni aucun motif n'est détecté.

La temporisation de déconnexion limite la durée d'interruption de la communication à une valeur inférieure à une durée provoquant l'interruption définitive de la communication.

En outre, le procédé de gestion d'interruption comprend l'étape de transmettre un signal d'accusé de réception par le premier terminal lorsque ledit motif a été détecté à l'étape de rechercher le motif.

Le procédé de gestion d'interruption est caractérisé en ce qu'il comprend, successivement à l'étape de transmettre le signal d'accusé de réception, les étapes de :
- rechercher une fréquence porteuse prédéterminée transmise par l'équipement,
- recevoir un message de données transmis par l'équipement lorsque la fréquence porteuse prédéterminée est trouvée pendant une durée prédéterminée,
- rechercher une perte de la fréquence porteuse prédéterminée pendant une durée prédéterminée après que le message soit reçu, et
- rétablir la communication interrompue entre les premier et second terminaux dès que la perte de fréquence porteuse prédéterminée est détectée pendant la durée prédéterminée à l'étape précédente.

L'étape de rechercher la perte de fréquence porteuse permet de vérifier que la réception de données est terminée et qu'il est alors possible de rétablir la communication en cours.

En variante, le procédé de gestion d'interruption comprend, successivement à l'étape de transmettre le signal d'accusé de réception les étapes de :
- recevoir un message de données sous la forme d'une suite de code DTMF,
- détecter un silence de durée supérieure à une durée prédéterminée correspondant à la durée entre deux codes DTMF successifs, et
- rétablir la communication interrompue entre les premier et second terminaux dès que le silence a été détecté à l'étape précédente.

De préférence, le signal d'alerte d'usager est un signal sinusoïdal ayant une fréquence de 440 Hz, et le signal d'alerte de terminal est composé de deux signaux sinusoïdaux de fréquence respective de 2130 Hz et 2750 Hz. Ces signaux sont facilement reconnaissables par un grand nombre de terminaux, notamment terminal téléphonique. Les fréquences du signal d'alerte de terminal peuvent être sensiblement comprises dans la bande de fréquence des signaux échangés entre les premier et second terminaux sans pour cela perturber le procédé d'interruption.

L'invention concerne également un procédé d'interruption temporaire d'une communication établie entre des premier et second terminaux. Le procédé d'interruption temporaire est mis en oeuvre dans un équipement traversé par la communication. Le procédé comprend les étapes successives de :
- interrompre la communication établie entre les premier et second terminaux,
- transmettre un signal d'alerte d'usager de l'équipement au premier terminal,
- transmettre un signal d'alerte de terminal de l'équipement au premier terminal,
- déclencher une temporisation d'attente d'un signal d'accusé de réception transmis depuis le premier terminal à l'équipement, et
- rétablir la communication entre les premier et second terminaux après la temporisation d'attente si l'équipement ne reçoit pas le signal d'accusé de réception, ou après la réception du signal d'accusé de réception et la transmission d'un message de données de l'équipement au premier terminal.

Le procédé d'interruption temporaire est caractérisé en ce qu'il comprend l'étape de :
- rétablir la communication entre les premier et second terminaux pendant une durée prédéterminée entre l'étape de transmettre le signal d'alerte d'usager et l'étape de transmettre le signal d'alerte de terminal.

Ainsi, la communication entre les premier et second terminaux n'est pas interrompue pendant une durée supérieure à une limite provoquant l'interruption définitive de la communication.

Le procédé d'interruption temporaire comprend l'étape de :
transmettre un signal de silence avec une puissance inférieure à une puissance prédéterminée, de préférence dans la bande de fréquence comprise entre 1000 Hz et 3000 Hz, pendant des première et seconde durées de silence prédéterminées, respectivement précédant et succédant à l'étape de transmettre le signal d'alerte de terminal.

La succession des signaux de silence, d'alerte de terminal et de silence forme le motif à reconnaître par le terminal.

Le procédé comprend en outre l'étape de :
transmettre un signal de silence avec une puissance inférieure à une puissance prédéterminée, de préférence dans la bande de fréquence comprise entre 1000 Hz et 3000 Hz, pendant une troisième durée prédéterminée succédant à la transmission du message de données.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 représente schématiquement un réseau téléphonique commuté connu ;
- la figure 2 est un diagramme temporel d'un procédé connu d'interruption de communication entre un centre de commutation et un terminal téléphonique du réseau téléphonique commuté de la figure 1 ;
- la figure 3 est un bloc-diagramme d'un terminal de données connu relié au réseau téléphonique commuté de la figure 1 ;
- la figure 4 est un diagramme temporel du procédé selon l'invention pour interrompre une communication entre un centre de commutation et le terminal de données de la figure 3 ;
- la figure 5 est un algorithme de gestion d'interruption de communication selon l'invention dans le terminal de données de la figure 3 ;
- la figure 6 est un algorithme de recherche d'un signal d'alerte de terminal selon l'invention ;
- la figure 7 est un diagramme temporel d'un dispositif de signal d'alerte de terminal recherché par l'algorithme de la figure 6 ;
- la figure 8 est une variante de l'algorithme de recherche d'un signal d'alerte de terminal selon la figure 6 ; et
- la figure 9 est un algorithme de communication entre le terminal de données et l'équipement inclus dans l'algorithme de la figure 5.

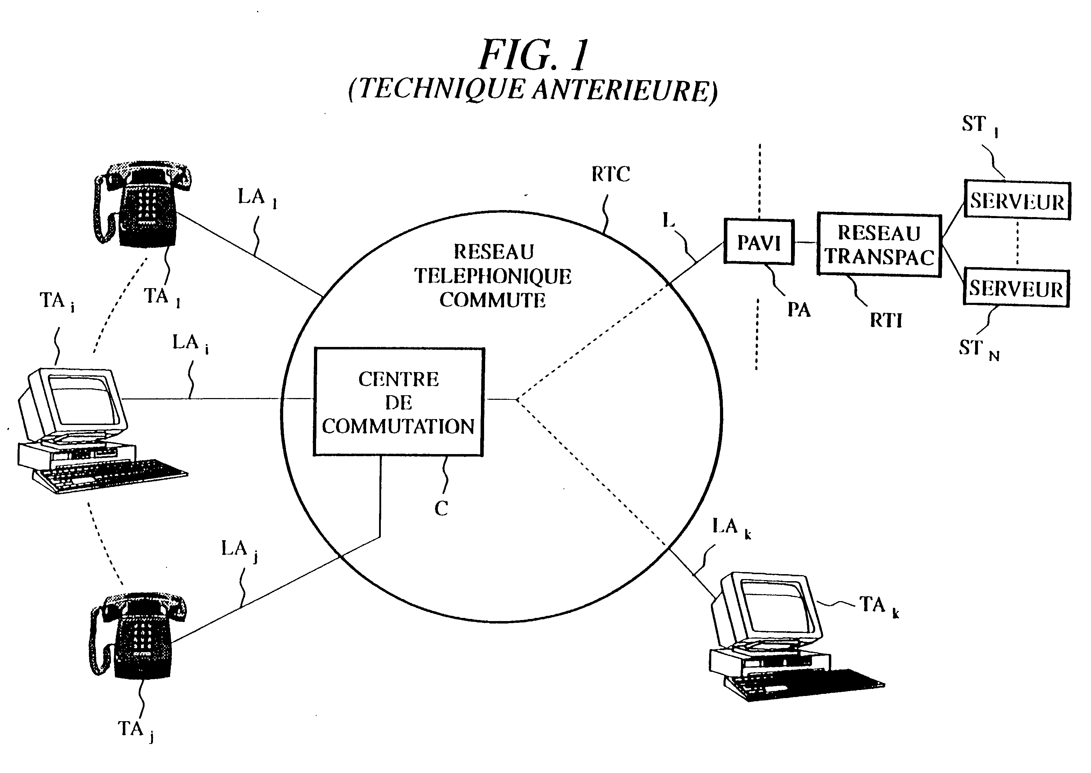

En référence à la figure 1, un réseau public ou privé RTC relie une pluralité de terminaux, dont quatre TA₁,... TAᵢ, TAⱼ,...TAₖ sont représentés, par des lignes analogiques respectives LA₁,....LAᵢ, LAⱼ,... LAₖ.

Le réseau RTC est par exemple le réseau téléphonique commuté public analogique et comprend des équipements propres à permettre des communications entre des terminaux d'abonné. Ces équipements sont notamment des centres de commutation et des circuits de transmission. A la figure 1, seul un centre de commutation C dont dépendent les terminaux TAᵢ et TAⱼ a été représenté. L'invention est appliquée également à un réseau privé comprenant un autocommutateur privé, fonctionnellement équivalent au centre de commutation C dans le cadre de l'invention, des terminaux d'abonné étant également raccordés à l'autocommutateur privé. En variante, l'invention est appliquée à des terminaux reliés par des lignes spécialisées à deux ou quatre fils sur lesquelles un équipement est placé en série et est traversé par la communication.

Les terminaux d'abonné TA₁ et TAⱼ sont des terminaux téléphoniques. Les terminaux d'abonné TAᵢ et TAₖ sont des terminaux de données intégrant un modem. A titre d'exemple, les terminaux TAᵢ et TAₖ peuvent être des terminaux vidéotex tels que terminaux Minitel (marque déposée) et/ou des télécopieurs.

Le réseau téléphonique RTC est en outre relié à des Points d'Accès VIDEOTEX (PAVI), par des lignes téléphoniques. Un point d'accès vidéotex PA et une ligne téléphonique L sont représentés à la figure 1. Le point d'accès PA adapte les signaux échangés entre le réseau téléphonique RTC et un réseau téléinformatique RTI tel que le réseau de commutation par paquets TRANSPAC (marque déposée). Le réseau RTI est relié à des serveurs téléinformatiques ST₁ à ST_{N}.

Des communications sont susceptibles d'être établies entre deux terminaux d'abonné compatibles entre eux, via le réseau téléphonique commuté. Ainsi les communications sont notamment :
- des communications entre deux ou plus terminaux téléphoniques ;
- des communications entre deux terminaux vidéotex ;
- des communications entre un terminal vidéotex et un serveur téléinformatique via le point d'accès vidéotex PA; et
- des communications entre deux télécopieurs.

Les communications transitent par le réseau téléphonique RTC, et plus précisément par au moins un centre de commutation tel que le centre de commutation C.

Il est maintenant supposé que deux terminaux d'abonné sont en communication. Afin de fixer les idées, la communication est établie entre les terminaux téléphoniques TA₁ et TAⱼ. Cette communication transite par le centre de commutation C. Un troisième terminal téléphonique appelle le terminal téléphonique TAⱼ pendant la communication. L'appel du troisième terminal téléphonique transite par le centre de commutation C.

En référence à la figure 2, un procédé connu (par l'exemple de l'article intitulé "The Analog Display Services Interface" de BARRY K. SCHWARTZ paru dans IEEE COMMUNICATIONS MAGAZINE ; vol. 31, no. 4, avril 1993, pages 70-75, XP 000359826) pour transmettre des données vers l'un TAⱼ des terminaux téléphoniques en interrompant temporairement la communication en cours entre les terminaux téléphoniques TA₁ et TAⱼ est utilisé pour transmettre au terminal téléphonique TAⱼ l'identité du troisième terminal téléphonique appelant le terminal téléphonique appelé TAⱼ.

Le procédé implique un interfonctionnement entre le centre de commutation C et le terminal téléphonique TAⱼ.

Le centre de commutation C procède à une interruption INT de la liaison analogique entre les terminaux téléphoniques TA₁ et TAⱼ, tout en maintenant la liaison physique pour ne pas rompre la communication. Le terminal téléphonique TA₁ n'est pas directement impliqué dans le procédé. Le terminal téléphonique TA₁ est isolé des autres terminaux pendant la durée de transmission de données par le centre de commutation téléphonique C et ne perçoit rien pendant le déroulement de la transmission de données.

Après l'interruption INT de la liaison analogique entre les terminaux téléphoniques TA₁ et TAⱼ , le centre de commutation C déclenche une temporisation W ayant une durée d'environ 55 ms. La temporisation W est une durée de silence à l'issue de laquelle le centre de commutation C transmet un signal sonore d'alerte d'usager SAU vers le terminal téléphonique TAⱼ. Le signal d'alerte d'usager est équivalent à un signal d'appel, encore appelé indicateur d'appel en instance. Le signal d'alerte d'usager SAU est un signal sinusoïdal de fréquence d'environ 440 Hz et a une durée comprise entre 250 et 1000 ms. L'usager du terminal téléphonique TAⱼ perçoit le signal d'alerte SAU.

Après la transmission du signal d'alerte d'usager SAU, le centre de commutation C transmet un signal d'alerte de terminal SAT composé de deux signaux sinusoïdaux dont les fréquences sont dans la partie supérieure de la bande téléphonique, soit environ 2130 Hz et 2750 Hz. Le signal d'alerte de terminal SAT a une durée comprise entre 80 et 85 ms. Le signal d'alerte d'usager SAU et le signal d'alerte de terminal SAT sont séparés par une temporisation X1 dont la durée est comprise entre 0 et 50 ms.

Après avoir transmis le signal d'alerte de terminal SAT, le centre de commutation C déclenche une temporisation T1 dont la durée est environ 160 ms. Pendant la temporisation T1, le centre de commutation C attend un message d'acquittement ACK transmis par le terminal téléphonique TAⱼ.

Le terminal téléphonique TAⱼ comprend un circuit de détection pour détecter le signal d'alerte de terminal SAT. Après avoir détecté le signal d'alerte de terminal SAT, le circuit de détection isole le combiné téléphonique du terminal téléphonique TAⱼ, c'est-à-dire isole le microphone et l'écouteur du combiné de la ligne téléphonique LAⱼ, pour que l'utilisateur du terminal téléphonique ne perçoive pas à l'oreille des tonalités correspondant à la transmission de données et inhibe toute numérotation à partir du clavier du terminal TAⱼ. Le terminal téléphonique TAⱼ transmet vers le centre de commutation C le message d'accusé de réception ACK qui est composé d'un code DTMF formé de deux signaux sinusoïdaux de fréquences égales à 941 Hz et 1 633 Hz. Le message d'accusé de réception ACK a une durée d'environ 60 ms et est transmis après une temporisation E comprise entre 0 et 100 ms déclenchée par le circuit de détection en réponse au signal d'alerte de terminal SAT.

Après avoir reçu le message d'accusé de réception ACK au cours de la temporisation T1, le centre de commutation C transmet un message de données MD vers le terminal téléphonique TAⱼ après une temporisation d'attente Q comprise entre 0 et 500 ms. Une temporisation supplémentaire S comprise entre 0 et 120 ms est déclenchée à la fin de la transmission du message de données MD. A l'issue de la temporisation S, le centre de commutation C rétablit la liaison analogique entre les terminaux téléphoniques TA₁ et TAⱼ pour que la conversation temporairement interrompue reprenne. La durée d'interruption entre l'interruption INT et l'expiration de la temporisation S est au maximum de 1,2 secondes à laquelle s'ajoutent la durée du signal d'alerte d'usager SAU et la durée du message de données MD transmis par le centre de commutation C.

Après avoir reçu le message de données MD ou après une temporisation TA d'attente du message de données MD d'environ 500 ms déclenchée après la transmission du message d'accusé de réception ACK, le terminal téléphonique TAⱼ bascule la ligne téléphonique vers le combiné, autorise la numérotation à partir du clavier et exploite le message de données MD reçu par exemple en affichant sur un écran un message à destination de l'usager. Le message affiché déclare l'identité du terminal téléphonique appelant, par exemple sous la forme d'un nom ou d'un numéro téléphonique.

Comme déjà dit, après la transmission du signal d'alerte de terminal SAT, le centre de commutation C déclenche une temporisation T1. Si le centre de commutation C ne reçoit pas de message d'accusé de réception ACK pendant la temporisation T1, le centre de commutation rétablit la liaison analogique entre les terminaux téléphoniques TA₁ et TAⱼ.

Après la transmission du message de données MD vers le terminal téléphonique TAⱼ, ou après la temporisation T1, la communication initiale entre les terminaux téléphoniques TA₁ et TAⱼ est rétablie.

Dans le cas où les terminaux d'abonné en cours de communication ne sont pas des terminaux téléphoniques, mais par exemple les terminaux de données TAᵢ et TAₖ (figure 1), le procédé selon la technique antérieure ne peut pas être mis en oeuvre sans perturber la communication de données en cours.

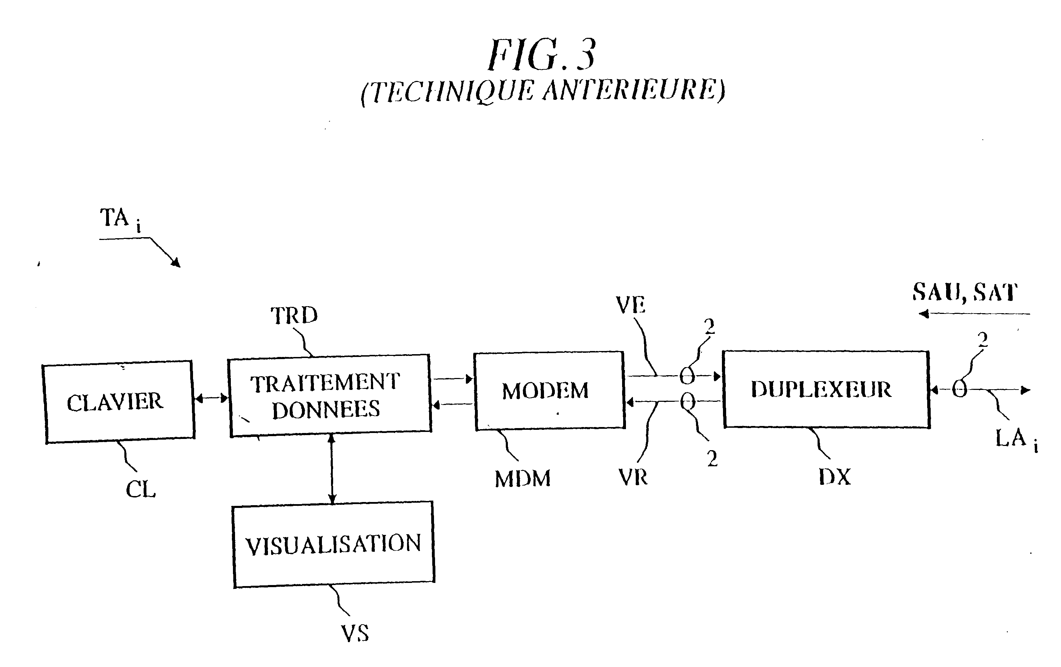

En référence à la figure 3, le terminal de données TAᵢ est relié à la ligne téléphonique d'abonné LAᵢ par l'intermédiaire d'un duplexeur DX. Le duplexeur DX est relié à un modem MDM. Un circuit de traitement de données TRD est associé à un clavier CL et un circuit de visualisation VS pour traiter des données à transmettre et à recevoir via la ligne téléphonique d'abonné LAᵢ par l'intermédiaire du modem MDM.

Les terminaux susceptibles de communiquer entr'eux ont des structures analogues. En particulier leurs modems sont capables d'entrer en communication selon des protocole et débit prédéterminés définis par l'une des recommandations du CCITT.

Ainsi, les terminaux TAᵢ et TAₖ sont des terminaux de type Minitel et communiquent entr'eux par l'intermédiaire de modems fonctionnant selon la recommandation V23 du CCITT. La communication transite par le centre de commutation C.

De préférence, après l'établissement de la communication, le terminal TAₖ transmet au terminal TAᵢ une indication sous la forme d'une séquence de caractères pour indiquer que le terminal TAₖ accepte la perte du signal transmis par le terminal TAᵢ pendant une durée supérieure à la durée maximale nécessaire pour une interruption temporaire. Cette séquence est par exemple analogue à la séquence appelée en vidéotex "IAN Transpac" et composée de cinq octets codés en hexadécimal sous la forme 1Bh, 20h, 2Xh, 2Yh, 30h où X et Y sont des paramètres.

Le centre de commutation C interrompt temporairement la communication en cours entre les terminaux TAᵢ et TAₖ pour transmettre des données vers le terminal TAᵢ lorsque ce dernier est un terminal appelé. Comme précédemment, l'interruption est par exemple provoquée par l'appel d'un troisième terminal de données qui cherche à entrer en communication avec le terminal TAᵢ.

Selon une première hypothèse, le terminal TAᵢ n'est pas conçu pour recevoir des données pendant l'interruption d'une communication principale de données. Lorsque le centre de commutation C interrompt la communication entre les terminaux TAᵢ et TAₖ, le modem du terminal TAᵢ, respectivement TAₖ, ne détecte plus l'énergie dans une bande de fréquence prédéterminée du signal modulant une fréquence porteuse, transmis depuis le modem du terminal TAₖ, respectivement TAᵢ. Le centre de commutation C transmet au terminal TAᵢ successivement le signal d'alerte d'usager SAU et le signal d'alerte de terminal SAT comme exposé en référence à la figure 2. Le terminal appelé TAᵢ ne reconnaît pas les signaux d'alerte SAU et SAT, et ne répond pas par le message d'accusé de réception ACK. A l'issue de la temporisation T1, le centre de commutation C rétablit la liaison analogique entre les terminaux TAᵢ et TAₖ. Les terminaux TAᵢ et TAₖ cherchent à rétablir la communication entre eux.

Cependant, la durée de non détection de signal transmis depuis le début d'interruption INT jusqu'à l'expiration de la temporisation T1 est supérieure à une durée de déconnexion maximale admissible TD, fixée à 430 ms après laquelle la non détection de signal transmis provoque la rupture définitive de la liaison. La communication entre les terminaux TAᵢ et TAₖ n'est donc pas rétablie.

Selon une seconde hypothèse, le terminal appelé TAᵢ est conçu pour détecter le signal d'alerte de terminal SAT et recevoir un message de données MD pendant l'interruption d'une communication principale de données, c'est-à-dire pendant l'interruption d'un signal de données transmis du terminal TAₖ vers le terminal TAᵢ. Au début INT de l'interruption, tant que le terminal appelé TAᵢ n'a pas détecté le signal SAT, le terminal TAᵢ peut continuer à transmettre un signal de données, destiné au terminal TAₖ, qui sera interrompu par le centre de commutation C. Le signal d'alerte de terminal SAT est difficile à détecter dans le terminal de données TAᵢ avec un taux de réussite satisfaisant. En effet, lorsque le terminal d'abonné TAᵢ est conçu pour transmettre et recevoir des données selon l'une des recommandations V23, V27ter et V29 du CCITT, le signal de données transmis pendant la communication principale a une puissance élevée aux fréquences du signal d'alerte de terminal SAT. En raison du couplage inévitable entre des voies d'émission et réception VE et VR dans le duplexeur DX du terminal TAᵢ, une partie du signal de données transmis dans la voie d'émission VE est réinjectée dans la voie de réception VR et perturbe le signal d'alerte de terminal SAT transmis par le centre de commutation C ce qui peut engendrer à tort un défaut de détection du signal SAT.

Par ailleurs, le terminal TAᵢ surveille la réception d'un signal d'alerte de terminal SAT sans savoir quand un tel signal lui sera transmis. Les fréquences du signal d'alerte de terminal SAT sont dans la bande de fréquence du signal de données transmis par le terminal TAₖ ce qui peut engendrer à tort une détection du signal d'alerte de terminal SAT pendant la communication principale de données.

Les détections erronées du signal SAT et les défauts de détection du signal SAT surviennent alors avec une probabilité trop élevée pour garantir la fiabilité du procédé selon cette hypothèse.

Bien que dans la seconde hypothèse le terminal TAᵢ soit conçu pour recevoir un message de données au cours d'une interruption temporaire, il est possible que le terminal TAₖ n'accepte pas la perte du signal transmis par le terminal TAᵢ pendant la durée de l'interruption temporaire. Dans ce cas, la communication entre les terminaux TAᵢ et TAₖ est définitivement interrompue.

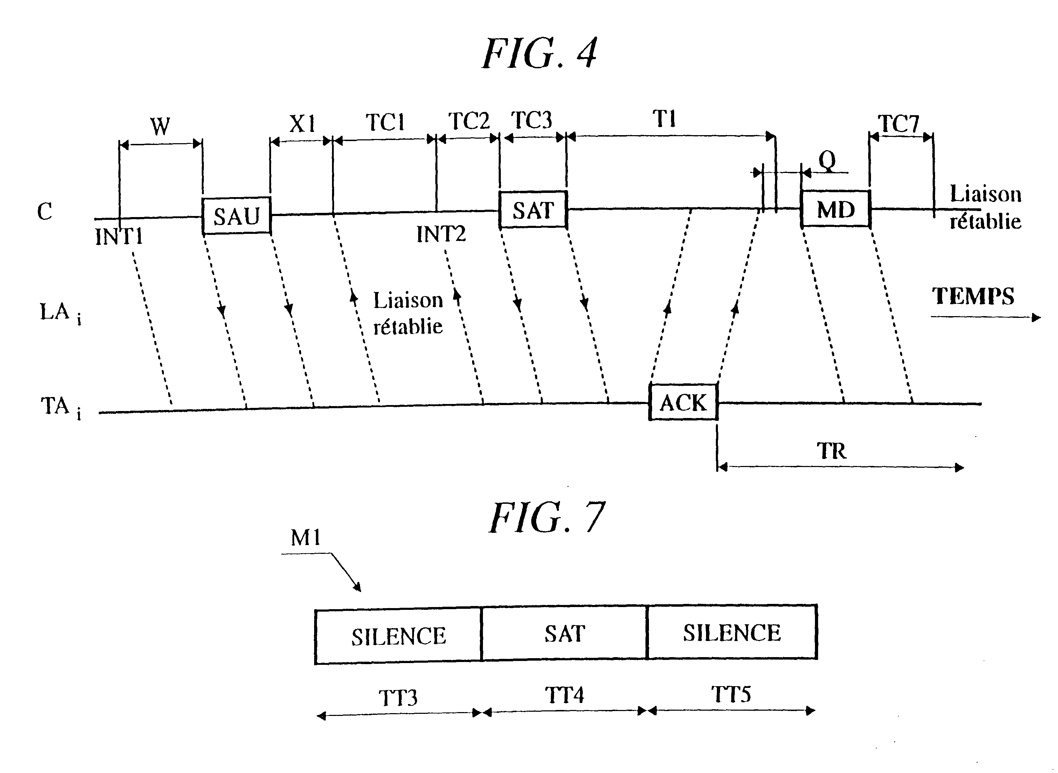

Selon le procédé de l'invention représenté à la figure 4, le centre de commutation C interrompt la liaison analogique entre les terminaux TAᵢ et TAₖ. Cette première interruption temporaire INT1 a seulement pour but de transmettre le signal d'alerte d'usager SAU. Le centre de commutation C déclenche la temporisation W, transmet le signal d'alerte d'usager SAU vers le terminal appelé TAᵢ puis déclenche la temporisation X1.

Après la temporisation X1, le centre de commutation C rétablit la liaison analogique entre les terminaux TAᵢ et TAₖ pendant une temporisation TC1 ayant une durée comprise entre environ 250 et 500 ms. L'interruption a une durée inférieure à 430 ms, et correspond à la somme des temporisations W et X1 et de la durée du signal d'alerte d'usager SAU. Ainsi, à titre d'exemple, la temporisation W est comprise entre environ 0 et 50 ms, le signal SAU est composé d'un signal sinusoïdal à la fréquence de 440 Hz et a une durée d'environ 300 ms, et la temporisation X1 est comprise entre environ 0 et 50 ms. La communication principale de données entre les terminaux TAᵢ et TAₖ est ainsi rétablie pendant la temporisation TC1 puisque la durée de perte de fréquence porteuse est inférieure à la limite TD fixée à 430 ms au delà de laquelle le terminal TAᵢ considère comme définitivement perdue la fréquence porteuse reçue et libère la ligne LAᵢ.

Après la temporisation TC1, le centre de commutation C interrompt à nouveau la liaison analogique entre les terminaux TAᵢ et TAₖ. Le centre de commutation C déclenche une temporisation TC2 d'une durée égale à 110 ms environ, puis transmet le signal d'alerte de terminal SAT au terminal TAᵢ. Le signal d'alerte de terminal SAT est composé de deux signaux sinusoïdaux de fréquences égales à environ 2130 Hz et 2750 Hz. Il est à noter que, selon l'invention, au moins l'une de ces fréquences porteuses peut être située dans la bande de fréquence des signaux transmis entre les terminaux TAᵢ et TAₖ lorsque ces derniers sont en communication, grâce à la temporisation TC2 succédant au rétablissement de la liaison pendant la temporisation TC1 et à la temporisation T1 suivant le signal d'alerte de terminal SAT. La durée TC3 du signal d'alerte de terminal SAT est comprise entre 80 et 85 ms environ.

Après la transmission du signal d'alertè de terminal SAT, le centre de commutation C déclenche la temporisation T1 de durée égale à environ 160 ms pendant laquelle le centre de commutation C attend le message d'accusé de réception ACK depuis le terminal TAᵢ.

Après avoir reçu le message d'accusé de réception ACK, le centre de commutation C déclenche la temporisation Q de durée comprise entre 0 et 100 ms, transmet le message de données MD vers le terminal TAᵢ par l'intermédiaire d'un modem puis arrête la transmission de la fréquence porteuse du modem et provoque un silence sur la ligne LAᵢ pendant une temporisation TC7 comprise entre environ 50 et 100 ms. Après la temporisation TC7 le centre de commutation C rétablit la liaison entre les terminaux TAᵢ et TAₖ.

Si le centre de commutation C ne reçoit pas le message d'acquittement ACK pendant la temporisation T1, le centre de commutation rétablit immédiatement la liaison analogique entre les terminaux TAᵢ et TAₖ. Dans ce cas, la durée de la seconde interruption temporaire INT2 est TC2 + TC3 + T1, soit environ 110 + 85 + 160 = 355 ms, et est ainsi inférieur à la durée de déconnexion égale à TD = 430 ms admissible par le terminal pour rompre la liaison analogique après une absence de fréquence porteuse trop longue.

Les temporisations TC2, T1 et TC7 sont des temps de silence pendant lesquels le niveau de signal dans la ligne LAᵢ a une puissance inférieure au niveau le plus faible des signaux échangés entre les terminaux TAᵢ et TAₖ en communication dans une bande de fréquence audible de préférence comprise entre 1000 et 3000 Hz. Le silence pendant la temporisation TC2 est nécessaire pour que le terminal TAᵢ détecte le signal d'alerte de terminal SAT quelle que soit la recommandation du CCITT appliquée pour la communication en cours. Le silence pendant la temporisation T1 permet au terminal TAᵢ de détecter le signal d'alerte de terminal SAT avec une fiabilité accrue et de lever l'ambiguïté entre une interruption INT2 et un autre évènement tel qu'un parasite sur la ligne d'abonné ou une demande d'inversion du sens de transmission entre les terminaux TAᵢ et TAₖ notamment lors d'une communication établie selon la Recommandation V23 du CCITT. Le silence pendant la temporisation TC7 permet le rétablissement de la communication entre les terminaux TAᵢ et TAₖ en cas de réception erronée du message de données MD.

Le procédé selon l'invention est également utilisable lorsque la communication à interrompre temporairement est une communication téléphonique. Le centre de commutation C ne connaît pas la nature de la communication en cours, que cette dernière soit téléphonique, téléinformatique ou encore mixte, c'est-à-dire comprenant successivement de la parole et des données. Le procédé s'applique ainsi à tous types de terminaux d'abonné, à la seule condition que le terminal d'abonné concerné soit conçu pour détecter le signal d'alerte de terminal SAT et pour y répondre par le message d'accusé de réception ACK. A titre d'exemple, il sera fait référence dans la suite à une fréquence porteuse prédéterminée de 1300 Hz qui correspond à des "1" binaires de messages de terminaux ou du centre de commutation, et qui est associée à une autre fréquence de 2100 Hz pour moduler des "0" binaires des messages.

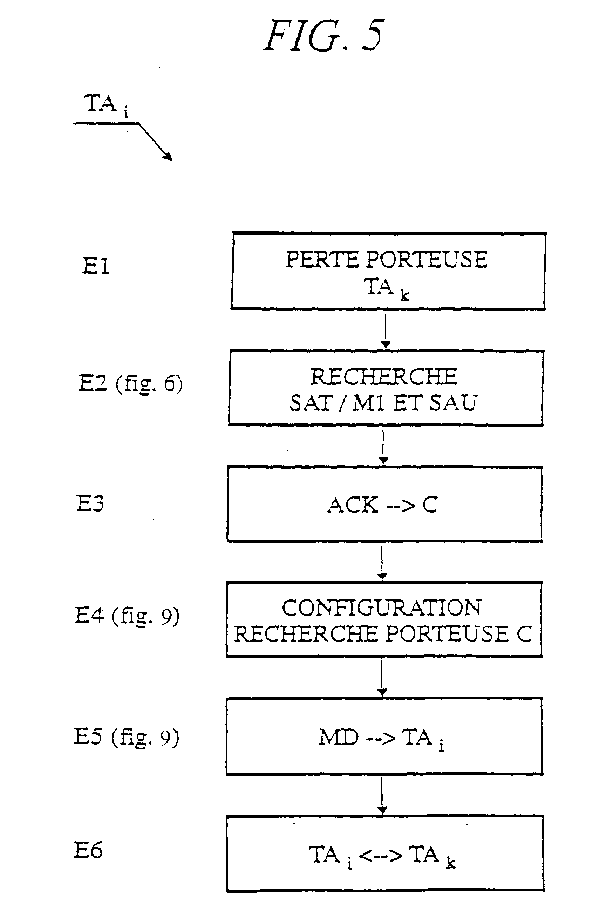

En référence à la figure 5, un algorithme de réponse du terminal TAᵢ à une interruption temporaire provenant du centre de commutation C comprend six étapes principales E1 à E6.

Le terminal TAᵢ est initialement en communication avec le terminal TAₖ.

A l'étape E1, le modem MDM du terminal TAᵢ constate la perte du signal modulant la fréquence porteuse transmis par le terminal TAₖ à travers le centre de commutation C. Plusieurs évènements sont susceptibles de provoquer la disparition du signal modulant la fréquence porteuse en cours de communication, dont notamment :
- une perturbation du réseau RTC,
- une déconnexion du terminal TAₖ,
- une demande d'inversion des vitesses de transmission pour une communication établie selon la Recommandation V23 du CCITT,
- un "passage de main" dans le cas d'une communication à l'alternat,
- une interruption temporaire INT1 ou INT2 provenant du centre de commutation C, telle que décrite en référence à la figure 4.

Lorsque la disparition du signal modulant la fréquence porteuse survient, le terminal TAᵢ ne connaît pas l'évènement qui l'a provoquée et cherche à identifier cet évènement.

A l'étape E2, le terminal appelé TAᵢ identifie l'évènement ayant provoqué la disparition du signal modulant la fréquence porteuse et recherche le signal d'alerte de terminal SAT et le signal d'alerte d'usager SAU. Le terminal TAₖ a préalablement transmis au terminal TAᵢ l'indication signifiant que le terminal TAₖ accepte la perte du signal transmis par le terminal TAᵢ pendant une durée supérieure à la durée maximale nécessaire pour une interruption temporaire. Si cette condition préalable n'est pas remplie, le procédé est interrompu, le terminal TAᵢ ne recherche pas le signal d'alerte de terminal SAT ni le signal d'alerte d'usager SAU et la communication est rétablie entre les terminaux TAᵢ et TAₖ.

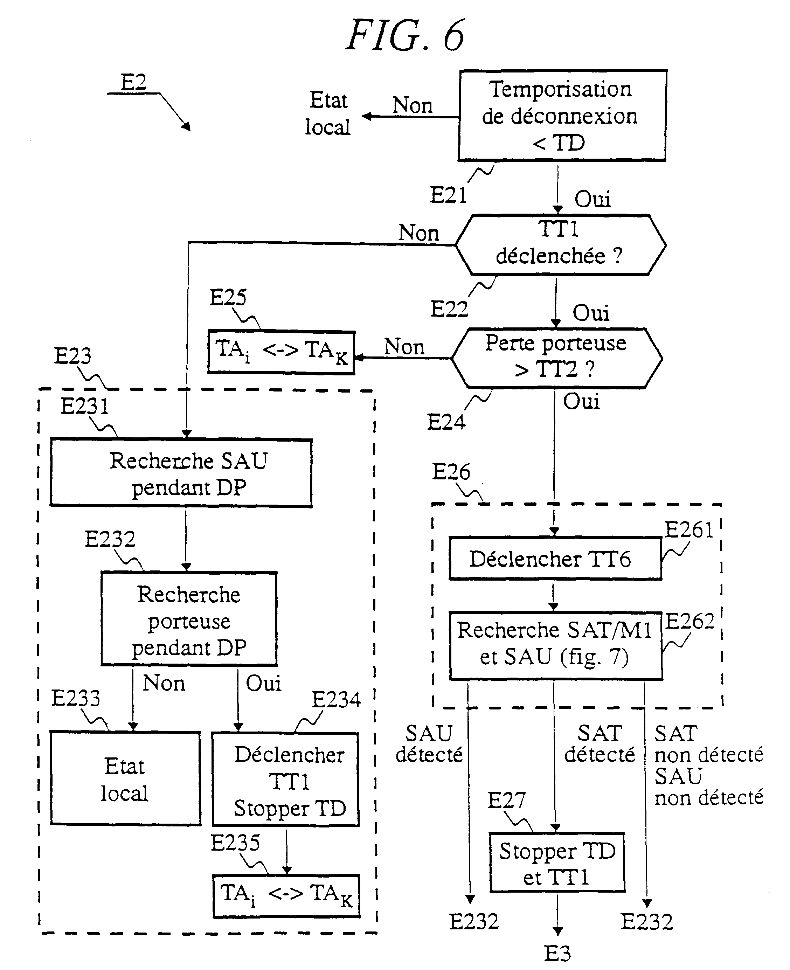

L'étape principale E2 comprend sept étapes E21 à E27 détaillées en référence à la figure 6. Dans le cas où le terminal identifie le signal d'alerte de terminal SAT, cela signifie que la perte de signal modulant la fréquence porteuse est due à une interruption temporaire. Le terminal TAᵢ passe alors à l'étape E3 à laquelle il transmet le message d'acquittement ACX vers le centre de commutation C.

A l'étape principale E4, le terminal TAᵢ configure le modem MDM pour recevoir des données selon des débit et format prédéterminés, correspondant à ceux utilisés par le centre de commutation C pour transmettre le message de données, puis recherche la fréquence porteuse du centre de commutation C.

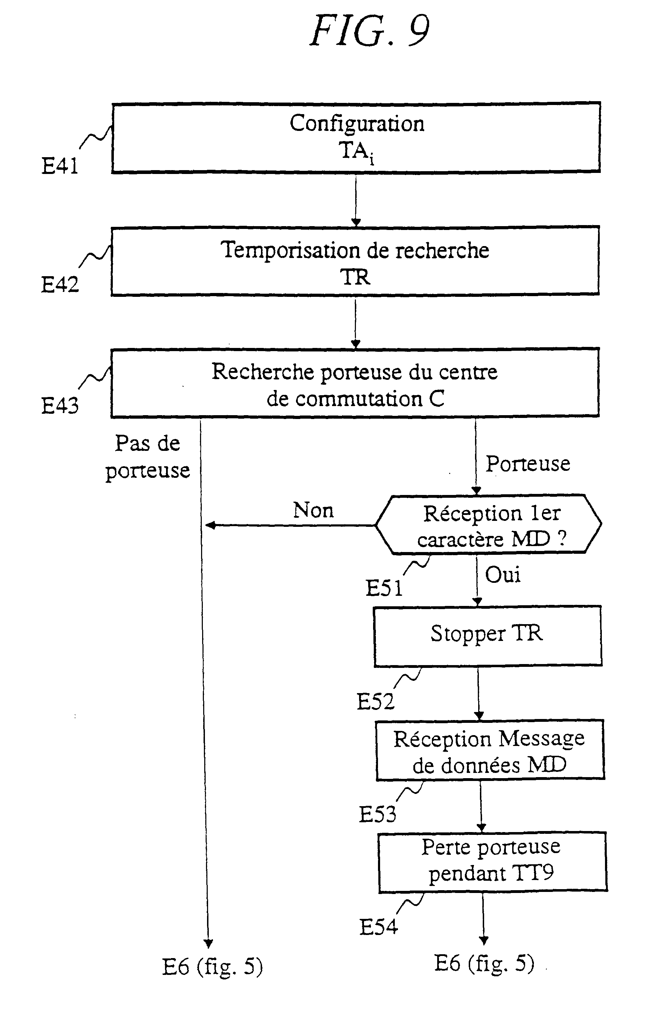

L'étape principale E5 est la réception du message de données MD. Les étapes principales E4 et E5 comprennent respectivement trois étapes E41 à E43 et quatre étapes E51 à E54, qui sont détaillées en référence à la figure 9. L'étape principale E6 est le rétablissement de la communication de données initiale entre le terminal TAᵢ et le terminal TAₖ.

A titre d'exemple, la communication entre les terminaux TAᵢ et TAₖ est établie selon la recommandation V23 du CCITT. Le terminal TAᵢ transmet des données à un débit de 75 bit/s et reçoit des données à un débit de 1200 bit/s.

En référence à la figure 6, après la disparition du signal modulant la fréquence porteuse du terminal TAₖ (étape E1), le terminal TAᵢ déclenche à l'étape E21 une temporisation de déconnexion TD égale à 430 ms. La temporisation TD est la durée maximale pendant laquelle la communication de données est interrompue sans provoquer la rupture définitive de la communication de données entre les terminaux TAᵢ et TAₖ. Si à l'issue de la temporisation de déconnexion TD le terminal TAᵢ n'a pas retrouvé le signal modulant la fréquence porteuse du modem du terminal TAₖ, le terminal TAᵢ passe à l'état local, c'est-à-dire un état définitivement déconnecté du réseau.

Le terminal TAᵢ vérifie à l'étape suivante E22 si une temporisation intermédiaire TT1, valant 1000 ms environ, a été précédemment déclenchée et est en train de s'écouler.

La temporisation intermédiaire TT1 est une durée maximale entre deux interruptions successives d'une communication entre les terminaux TAᵢ et TAₖ. Dans le cas de l'interruption temporaire, les deux interruptions sont les interruptions INT1 et INT2 correspondant respectivement à la transmission d'un signal d'alerte d'usager SAU et d'un signal d'alerte de terminal SAT (figure 4). La temporisation intermédiaire TT1 dépend de la durée de la temporisation TC1.

Si la temporisation TT1 n'est pas déclenchée, le terminal TAᵢ passe à l'étape E23 de recherche de signal d'alerte d'usager SAU. L'étape E23 comprend cinq sous-étapes E231 à E235.

La sous-étape E231 est la recherche classique du signal d'alerte d'usager SAU proprement dite, pendant une temporisation DP1. Lorsque le terminal TAᵢ a détecté le signal d'alerte d'usager SAU, cela correspond à l'identification de l'interruption INT1. Puis le terminal TAᵢ recherche à la sous-étape E232 la présence du signal modulant la fréquence porteuse du terminal TAₖ, signalant la fin de l'interruption INT1. Si le terminal TAᵢ ne détecte pas le signal modulant la fréquence porteuse du terminal TAₖ pendant une durée prédéterminée DP2 égale à 20 ms environ, il passe à la sous-étape E233 à laquelle le modem du terminal TAᵢ passe à l'état local. La sous-étape E233 correspond à la rupture de la communication provoquée par le terminal TAᵢ, c'est-à-dire la libération de la ligne LAᵢ par le terminal TAᵢ.

Lorsque le terminal TAᵢ a détecté le signal modulant la fréquence porteuse du terminal TAₖ à la sous-étape E232, il passe à la sous-étape E234 à laquelle la temporisation de déconnexion TD est arrêtée et si le terminal TAᵢ a détecté le signal d'alerte d'usager SAU à la sous-étape E231, la temporisation TT1, égale à 1000 ms, est déclenchée. L'algorithme passe ensuite à la sous-étape E235 de reprise de communication avec le terminal TAₖ.

En revenant à l'étape E22, si la temporisation TT1 a été précédemment déclenchée (sous-étape E234) et est en train de s'écouler, cela signifie que le terminal TAᵢ a reçu un signal d'alerte d'usager SAU précédemment pendant une interruption de communication INT1, et que l'interruption de communication correspondant à la disparition du signal modulant la fréquence porteuse qui vient d'être constaté à l'étape E1 est susceptible de correspondre à une interruption INT2 provoquée pour transmettre un message de données MD (figure 4). L'algorithme passe alors à l'étape E24 pour vérifier si l'absence de signal modulant la fréquence porteuse dure pendant au moins une durée minimale de vérification TT2 de 60 ms environ.

Si ce n'est pas le cas, la perte du signal modulant la fréquence porteuse du terminal TAₖ est due à une perturbation intempestive du réseau RTC et l'algorithme passe alors à l'étape E25 de reprise de communication avec le terminal TAₖ. L'étape E25 est analogue à la sous-étape E235.

Si à l'étape E24 la perte de signal modulant de fréquence porteuse du terminal TAₖ dure plus que la temporisation TT2 égale à 60 ms, le signal d'alerte de terminal SAT est recherché à l'étape E26 pour identifier l'interruption INT2. L'étape E26 comprend deux sous-étapes E261 et E262. La recherche de l'interruption INT2 est conditionnée par la réception préalable du signal d'alerte d'usager SAU. En outre, la réception préalable du signal d'alerte d'usager SAU doit avoir eu lieu dans le délai TT1 pour conditionner le passage à l'étape E26.

L'étape E26 comprend les recherches simultanées de signal d'alerte de terminal SAT et d'un éventuel autre signal d'alerte d'usager SAU. En effet, le centre de commutation C est susceptible de transmettre plusieurs signaux d'alerte d'usager SAU successivement avant la transmission du signal d'alerte de terminal SAT.

A la sous-étape E261, l'algorithme déclenche une temporisation TT6 ayant une durée de 260 ms environ. La temporisation TT6 est une temporisation d'attente du signal d'alerte de terminal SAT. Si à l'issue de la temporisation TT6, le terminal TAᵢ n'a pas détecté le signal d'alerte de terminal SAT ni le signal d'alerte d'usager SAU, l'algorithme passe à la sous-étape E232 pour rétablir la communication avec le terminal TAₖ.

La sous-étape E262 est la recherche du signal d'alerte de terminal SAT et du signal d'alerte d'usager SAU simultanément.

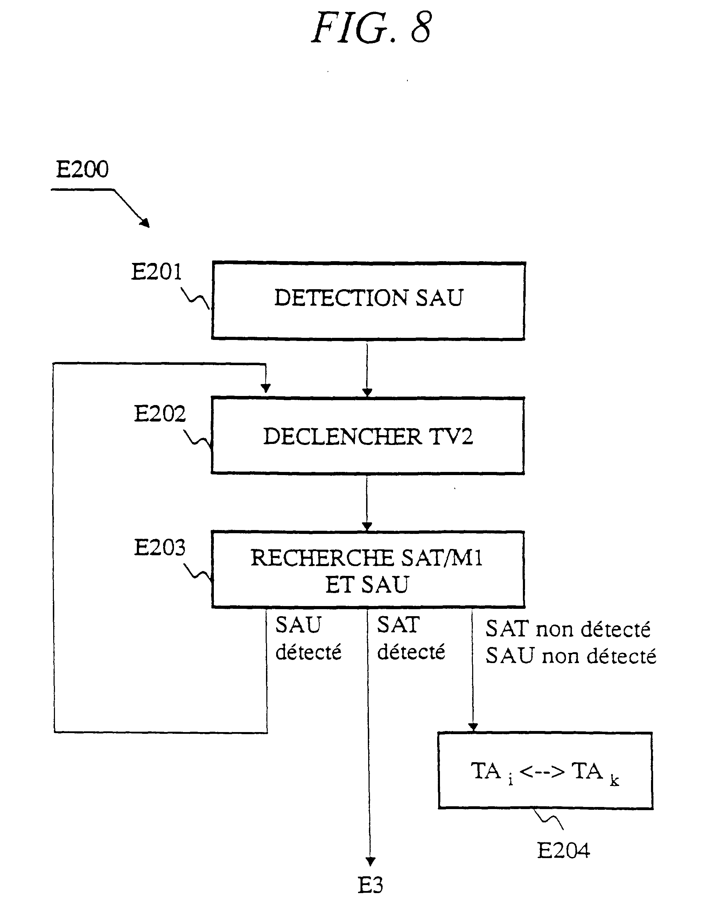

Pour détecter le signal SAT avec une fiabilité satisfaisante, le terminal TAᵢ recherche un motif M1 représenté à la figure 7 et comprenant des premier, second et troisième signaux successifs.

Le premier signal est un silence ayant une durée prédéterminée TT3, par exemple au moins égale à 20 ms. Le silence de durée TT3 est provoqué par le silence TC2 (figure 4). En pratique, le silence de durée TT3 du motif M1 peut être confondu avec le silence de durée TT2 (étape E24) qui conditionne la recherche du signal d'alerte de terminal SAT.

Le second signal est le signal d'alerte de terminal SAT pendant une durée TT4 dépendant de la durée TC3 de transmission du signal SAT par le centre de commutation C (figure 4).

Le troisième signal est un silence de durée TT5 provoqué par le début du silence de durée T1 transmis par le centre de commutation C. La durée TT5 vaut au minimum environ 20 ms.

Chacun des silences de durée TT3 et TT5 correspond à un niveau de signal reçu ayant une puissance inférieure au niveau le plus faible des signaux échangés entre les terminaux TAᵢ et TAₖ lorsqu'ils sont en communication, dans la bande de fréquence comprise entre 300 Hz et 3400 Hz, c'est-à-dire une puissance inférieure à la puissance de tout signal de données normal transmis dans la ligne LAᵢ.

Si aucun signal d'alerte de terminal SAT ni aucun signal d'alerte d'usager SAU n'a été détecté à l'issue de la temporisation TT6 à l'étape E26, alors l'algorithme passe à la sous-étape E232 dans le but de rétablir la communication avec le terminal TAₖ.

Si un signal d'alerte d'usager SAU a été détecté à l'étape E26, alors l'algorithme passe à l'étape E232 pour détecter le signal modulant de la fréquence porteuse du terminal TAₖ, puis à l'étape E234 pour redéclencher la temporisation TT1.

Si un signal d'alerte de terminal SAT a été détecté à l'étape E26, alors l'algorithme passe à l'étape E27 pour stopper la temporisation de déconnexion TD et la temporisation TT1, puis passe à l'étape E3 précédemment décrite (figure 5).

Dans le cas où les terminaux TAᵢ et TAₖ sont en communication selon la recommandation V23 du CCITT, le terminal TAᵢ étant en réception au débit de 75 bit/s et en transmission au débit de 1200 bit/s, l'algorithme est modifié.

La détection du signal d'alerte de terminal SAT (étape E26) n'est pas conditionnée par la détection préalable d'un signal d'alerte d'usager SAU et le déclenchement associé de la temporisation TT1 (étapes E22 et E23).

A l'étape E1, le modem MDM du terminal TAᵢ interrompt la transmission du signal de données à destination du terminal TAₖ dès que le modem MDM a détecté la perte du signal modulant la fréquence porteuse du terminal TAₖ pour éviter de perturber la réception du signal d'alerte de terminal SAT dans le cas de l'interruption INT2. Le signal d'alerte de terminal SAT est détecté par le motif M1 comme précédemment exposé.

Dans le cas où les terminaux TAᵢ et TAₖ sont en communication selon la recommandation V27ter ou V29 du CCITT, l'algorithme est modifié.

Le terminal TAᵢ comprend un circuit de détection du signal d'alerte d'usager SAU qui recherché en permanence le signal SAU dès que la communication entre les terminaux TAᵢ et TAₖ est établie. L'algorithme ne comprend pas l'étape E1 de perte de fréquence porteuse de terminal TAₖ et l'étape principal E2 est remplacée par l'étape principale E200 décrite en référence à la figure 8.

L'étape principale E200 comprend quatre étapes E201 à E204.

L'étape E201 est la détection du signal d'alerte d'usager SAU, après laquelle l'algorithme passe à l'étape E202 pour déclencher une temporisation TV2, égale à environ 1000 ms, pendant laquelle un signal d'alerte de terminal SAT et un éventuel signal d'alerte d'usager SAU sont recherchés simultanément (étape E203). Le modem MDM du terminal TAᵢ interrompt la transmission du signal de données à destination du terminal TAₖ dès que le circuit de détection a détecté le signal d'alerte d'usager pour éviter de perturber la réception du signal d'alerte de terminal SAT dans le cas de l'interruption INT2. Le signal d'alerte de terminal SAT est détecté par le motif M1 comme précédemment exposé.

Comme la temporisation TT1 la temporisation TV2 dépend de la durée de la temporisation TC1.

Si un signal d'alerte d'usager SAU est détecté à l'étape E203 alors l'algorithme retourne à l'étape E202 pour redéclencher la temporisation TV2.

Si un signal d'alerte de terminal SAT est détecté à l'étape E203 alors l'algorithme passe à l'étape E3 précédemment décrite.

Si aucun signal d'alerte de terminal SAT ni aucun signal d'alerte d'usager SAU n'est détecté à l'étape E203 pendant la temporisation TV2, l'algorithme passe à l'étape E204 de rétablissement de la communication entre les terminaux TAᵢ et TAₖ.

En référence à la figure 9, les étapes principales E4 et E5 comprennent respectivement trois sous-étapes E41 à E43 et quatre sous-étapes E51 à E54.

L'étape E41 est la configuration du terminal TAᵢ pour recevoir le message de données MD depuis le centre de commutation C selon un débit et un format prédéterminé. A titre d'exemple, le débit est 1200 bit/s et le format est de 8 bits sans bit de parité et avec un bit de stop.

A l'étape E42, l'algorithme déclenche une temporisation de recherche TR, égale à environ 380 ms, à la suite de la transmission du message d'acquittement ACK. La temporisation TR limite la durée de l'étape E43 de recherche de la fréquence porteuse typiquement à 1300 Hz et correspondant à des "1" binaires, transmise par le centre de commutation C. Si à l'issue de la temporisation TR, la fréquence porteuse du centre de commutation C n'a pas été détectée, l'algorithme passe à l'étape E6.

Si à l'étape E43 la fréquence porteuse du centre de commutation C est détectée pendant une durée égale à environ 30 ms, alors l'algorithme passe à l'étape E51 à laquelle il attend de recevoir le premier caractère du message de données MD.

L'étape E51 évite une situation de blocage au cas où le centre de commutation C interrompt la transmission du message de données MD de manière inopinée. Si le terminal TAᵢ ne reçoit pas le premier caractère du message de données MD pendant la temporisation TR, alors l'algorithme passe à l'étape E6.

Lorsque le terminal TAᵢ reçoit le premier caractère du message MD, l'algorithme passe à l'étape E52 pour interrompre la temporisation TR puis à l'étape E53 pour recevoir le message de données MD. A la fin de la réception du message de données MD, l'algorithme recherche à l'étape E54 une perte de la fréquence porteuse du centre de commutation C pendant une durée TT9 égale à environ 40 ms. L'algorithme passe ensuite à l'étape E6.

La durée TT9 permet de confirmer la fin de la transmission de message de données MD avant de reprendre la communication entre les terminaux TAᵢ et TAₖ.

En variante, le centre de commutation transmet le message de données MD au terminal TAᵢ sous la forme d'une suite de codes DTMF. Le terminal TAᵢ comprend alors un récepteur de codes DTMF pour recevoir le message de données. Le récepteur de codes DTMF est en permanence connecté à la ligne ou est connecté après l'émission de l'accusé de réception ACₖ. Le terminal TAᵢ détecte la fin du message de données MD par la réception d'un silence de durée supérieure à une durée prédéterminée correspondant à la durée maximale de silence entre deux codes DTMF successifs. Après la détection du silence, le terminal TAᵢ rétablit la communication avec le terminal TAₖ.

En variante, le message de données est un message sonore reçu par un circuit de reconnaissance vocale compris dans le terminal TAᵢ.

De préférence, les terminaux TAᵢ et TAₖ mettent en oeuvre un dispositif de correction d'erreur. Ainsi, des données échangées entre les terminaux TAᵢ et TAₖ qui seraient perdues lors de l'interruption de la communication, quelle que soit la cause de cette interruption, seront "répétées" après la reprise de la communication entre les terminaux TAᵢ et TAₖ.

## Revendications

1. Procédé de gestion d'interruption d'une communication établie via une liaison analogique entre des premier et second terminaux (TAᵢ, TAₖ) à travers notamment un équipement (C) traversé par la communication, qui provoque l'interruption (INT2), ledit procédé étant mis en oeuvre dans le premier terminal (TAᵢ), **caractérisé en ce qu'**il comprend l'étape de rechercher (E26,E203) pendant une durée de recherche prédéterminée (TT6,TV2) un motif (M1) transmis par l'équipement (C) comprenant la succession :
d'un premier signal de silence pendant une première durée de silence prédéterminée (TT3),
d'un signal d'alerte de terminal (SAT) transmis par l'équipement (C), et
d'un second signal de silence pendant une seconde durée de silence prédéterminée (TT5),
chacun des premier et second signaux de silence ayant une puissance inférieure au niveau de puissance le plus faible des signaux échangés entre les premier et second terminaux dans la bande de fréquence desdits signaux échangés.

2. Procédé de gestion d'une interruption conforme à la revendication 1, selon lequel l'équipement (C) interrompt la communication établie pour transmettre un signal d'alerte d'usager (SAU) précédemment au signal d'alerte de terminal (SAT),
**caractérisé en ce qu'**il comprend les étapes de :
- constater (E1) l'interruption de la communication établie,
- vérifier (E22) un déclenchement d'une temporisation intermédiaire (TT1), successivement à l'étape de constater précédente,
- rechercher (E231) pendant une durée prédéterminée (DP1) le signal d'alerte d'usager (SAU) transmis par l'équipement (C), lorsque la temporisation intermédiaire (TT1) n'est pas déclenchée,
- rechercher (E232) un signal modulant une fréquence porteuse prédéterminée transmis par le second terminal pendant une durée prédéterminée (DP2), après que le signal d'alerte d'usager recherché (SAU) soit détecté, et
- déclencher (E234) la temporisation intermédiaire (TT1) lorsque le signal modulant la fréquence porteuse prédéterminée a été détecté, et rompre (E233) la communication établie lorsque le signal modulant la fréquence porteuse recherché n'est pas détecté,
l'étape de rechercher le motif (E26) n'étant réalisée qu'après que la perte du signal modulant la fréquence porteuse prédéterminée soit constatée pendant la temporisation intermédiaire déclenchée (TT1).

3. Procédé de gestion d'une interruption conforme à la revendication 1, **caractérisé en ce qu'**il comprend, préalablement à l'étape (E203) de rechercher le motif, les étapes de :
- recevoir (E201) un signal d'alerte d'usager (SAU), et
- déclencher (E202) une temporisation (TV2) correspondant à la durée de recherche prédéterminée.

4. Procédé de gestion d'une interruption conforme à la revendication 2, **caractérisé en ce qu'**il comprend l'étape (E21) de déclencher une temporisation de déconnexion (TD) préalablement aux étapes (E231, E26) de rechercher le signal d'alerte d'usager (SAU) et de rechercher le motif (M1), ladite temporisation de déconnexion (TD) étant une durée maximale de perte de signal modulant la fréquence porteuse prédéterminée au-delà de laquelle le premier terminal (TAᵢ) rompt la communication établie, et **en ce qu'**à l'issue de la temporisation de déconnexion, le premier terminal (TAᵢ) rétablit la communication avec le second terminal (TAₖ) si le signal modulant la fréquence porteuse prédéterminée est retrouvé et si aucun signal d'alerte d'usager (SAU) ni aucun motif (M1) n'est détecté (E264, E232, E235).

5. Procédé de gestion d'interruption conforme à l'une quelconque des revendications 1 à 4, **caractérisé en ce qu'**il comprend l'étape (E3) de transmettre un signal d'accusé de réception (ACK) par le premier terminal (TAᵢ) lorsque ledit motif (M1) a été détecté à l'étape (E26) de rechercher le motif (M1).

6. Procédé de gestion d'interruption conforme à la revendication 5, **caractérisé en ce qu'**il comprend, successivement à l'étape (E3) de transmettre le signal d'accusé de réception (ACK), les étapes de :
- rechercher (E43) une fréquence porteuse prédéterminée transmise par l'équipement (C),
- recevoir (E53) un message de données (MD) transmis par l'équipement (C) lorsque la fréquence porteuse prédéterminée est trouvée pendant une durée prédéterminée (TR),
- rechercher (E54) une perte de la fréquence porteuse prédéterminée pendant une durée prédéterminée (TT9) après que le message (MD) soit reçu, et
- rétablir (E6) la communication interrompue entre les premier et second terminaux (TAᵢ, TAₖ) dès que la perte de fréquence porteuse prédéterminée est détectée pendant la durée prédéterminée (TT9) à l'étape précédente.

7. Procédé de gestion d'interruption conforme à la revendication 5, **caractérisé en ce qu'**il comprend, successivement à l'étape (E3) de transmettre le signal d'accusé de réception (ACK) les étapes de :
- recevoir un message de données sous la forme d'une suite de code DTMF,
- détecter un silence de durée supérieure à une durée prédéterminée correspondant à la durée entre deux codes DTMF successifs, et
- rétablir la communication interrompue entre les premier et second terminaux dès que le silence a été détecté à l'étape précédente.

8. Procédé de gestion d'interruption conforme à l'une quelconque des revendications 1 à 7, **caractérisé en ce que** le signal d'alerte de terminal (SAT) comprend un signal sinusoïdal ayant une fréquence sensiblement comprise dans la bande de fréquence des signaux échangés entre les premier et second terminaux (TAᵢ, TAₖ).

9. Procédé exécuté dans un équipement (C) pour interrompre temporairement une communication établie entre des premier et second terminaux (TAᵢ, TAₖ) et traversant ledit équipement, le premier terminal (TAᵢ) mettant en oeuvre le procédé de gestion d'interruption d'une communication conforme à l'une quelconque des revendications 1 à 8,
ledit procédé comprenant dans l'équipement les étapes successives de :
- interrompre (INT1) la communication établie entre les premier et second terminaux,
- transmettre un signal d'alerte d'usager (SAU) de l'équipement au premier terminal (TAᵢ),
- transmettre un signal d'alerte de terminal (SAT) de l'équipement au premier terminal,
- déclencher une temporisation d'attente (T1) d'un signal d'accusé de réception (ACK) transmis depuis le premier terminal à l'équipement, et
- rétablir la communication entre les premier et second terminaux (TAᵢ, TAₖ) après la temporisation d'attente (T1) si l'équipement (C) ne reçoit pas le signal d'accusé de réception (ACK), ou après la réception du signal d'accusé de réception (ACK) et la transmission d'un message de données (MD) de l'équipement au premier terminal,
**caractérisé en ce qu'**il comprend l'étape de :
- rétablir la communication entre les premier et second terminaux (TAᵢ, TAₖ) pendant une durée prédéterminée (TC1) entre l'étape de transmettre le signal d'alerte d'usager (SAU) et l'étape de transmettre le signal d'alerte de terminal (SAT).

10. Procédé conforme à la revendication 9, **caractérisé en ce qu'**il comprend l'étape de :
transmettre un signal de silence avec une puissance inférieure à une puissance prédéterminée pendant des première et seconde durées de silence prédéterminées (TC2, T1) respectivement précédant et succédant à l'étape de transmettre le signal d'alerte de terminal (SAT).

11. Procédé conforme à la revendication 9 ou 10, **caractérisé en ce qu'**il comprend l'étape de :
transmettre un signal de silence avec une puissance inférieure à une puissance prédéterminée pendant une troisième durée prédéterminée (TC7) succédant à la transmission du message de données (MD).

## Patentansprüche

1. Verfahren zur Unterbrechungssteuerung einer Verbindung, die über eine Analogverbindung zwischen ersten und zweiten Endgeräten (TAᵢ, TAₖ) durch insbesondere ein von der Verbindung durchlaufenes Gerät, das die Unterbrechung (INT2) herbeiführt, wobei das Verfahren im ersten Endgerät (TAᵢ) ausgeführt wird, **dadurch gekennzeichnet, daß** es den Schritt umfaßt, während einer vorbestimmten Suchzeitdauer (TT6, TV2) ein von dem Gerät (C) übertragenes Muster (M1) zu suchen (E26, E203) umfassend die Folge:
eines ersten Ruhesignals während einer ersten vorbestimmten Ruhezeitdauer (TT3),
eines Endgerätalarmsignals (SAT), das durch das Gerät (C) übertragen wird,
eines zweiten Ruhesignals während einer zweiten vorbestimmten Ruhezeitdauer (TT5),
wobei jedes der ersten und zweiten Ruhesignale eine Leistung kleiner als der geringste Leistungspegel der zwischen den ersten und zweiten Endgeräten ausgetauschten Signale im Frequenzband der ausgetauschten Signale aufweist.

2. Verfahren zur Steuerung einer Unterbrechung nach Anspruch 1, gemäß dem das Gerät (C) die hergestellte Verbindung unterbricht, um ein Benutzeralarmsignal (SAU) vorhergehend zum Endgerätalarmsignal (SAT) zu übertragen,
**dadurch gekennzeichnet, daß** es die Schritte umfaßt:
- Feststellen (E1) der Unterbrechung der hergestellten Verbindung,
- Prüfen (E22) einer Auslösung einer Zwischenverzögerungszeit (TT1) folgend auf den vorhergehenden Feststellungsschritt,
- Suchen (E231) des durch das Gerät (C) übertragenen Benutzeralarmsignals (SAU) während einer vorbestimmten Zeitdauer (DP1), wenn die Zwischenverzögerungszeit (TT1) nicht ausgelöst ist,
- Suchen (E232) eines durch das zweite Endgerät während einer vorbestimmten Zeitdauer (DP2) übertragenen Signals, das eine vorbestimmte Trägerfrequenz moduliert, nachdem das gesuchte Benutzeralarmsignal (SAU) erfaßt worden ist,
- Auslösen (E234) der Zwischenverzögerungszeit (TT1), wenn das die vorbestimmte Trägerfrequenz modulierende Signal erfaßt worden ist, und Trennen (E233) der hergestellten Verbindung, wenn das gesuchte, die Trägerfrequenz modulierende Signal nicht erfaßt ist,
wobei der Schritt des Mustersuchens (E26) erst durchgeführt wird, nachdem der Verlust des die vorbestimmte Trägerfrequenz modulierenden Signals während der ausgelösten Zwischenverzögerungszeit (TT1) festgestellt worden ist.

3. Verfahren zur Steuerung einer Unterbrechung nach Anspruch 1, **dadurch gekennzeichnet, daß** es vorhergehend zum Schritt (E203) des Mustersuchens die Schritte umfaßt:
- Empfangen (E201) eines Benutzeralarmsignals (SAU) und
- Auslösen (E202) einer Verzögerungszeit (TV2) entsprechend der vorbestimmten Suchzeitdauer.

4. Verfahrung zur Steuerung einer Unterbrechung nach Anspruch 2, **dadurch gekennzeichnet, daß** es den Schritt (E21) umfaßt, daß vorhergehend zu den Schritten (E231, E26) des Suchens des Benutzeralarmsignals (SAU) und des Mustersuchens (M1) eine Abschältverzögerungszeit ausgelöst wird, wobei die Abschaltverzögerungszeit (TD) eine maximale Verlustzeitdauer des die vorbestimmte Trägerfrequenz modulierenden Signals ist, über die hinaus das erste Endgerät (TAᵢ) die hergestellte Verbindung trennt, und daß am Ende der Abschaltverzögerungszeit das erste Endgerät (TAᵢ) die Verbindung mit dem zweiten Endgerät (TAₖ) wiederherstellt, wenn das die vorbestimmte Trägerfrequenz modulierende Signal wiedergefunden wird und wenn weder ein Benutzeralarmsignal (SAU), noch irgendein Muster (M1) erfaßt worden ist (E264, E232, E235).

5. Verfahren zur Unterbrechungssteuerung nach einem beliebigen der Ansprüche 1 bis 4, **dadurch gekennzeichnet, daß** es den Schritt (E3) umfaßt, daß ein Empfangsbestätigungssignal (ACK) durch das erste Endgerät (TAᵢ) übertragen wird, wenn das Muster (M1) beim Schritt (E26) des Suchens des Musters (M1) erfaßt worden ist.

6. Verfahren zur Unterbrechungssteuerung nach Anspruch 5, **dadurch gekennzeichnet, daß** es folgend auf den Schritt (E3) des Übertragens des Empfangsbestätigungssignals (ACK) die Schritte umfaßt:
- Suchen (E43) einer durch das Gerät (C) übertragenen vorbestimmten Trägerfrequenz,
- Empfangen (E53) einer durch das Gerät (C) übertragenen Datennachricht (MD), wenn die vorbestimmte Trägerfrequenz während einer vorbestimmten Zeitdauer (TR) gefunden wird,
- Suchen (E54) eines Verlusts der vorbestimmten Trägerfrequenz während einer vorbestimmten Zeitdauer (TT9), nachdem die Nachricht (MD) empfangen worden ist,
- Herstellen (E6) der unterbrochenen Verbindung zwischen den ersten und zweiten Endgeräten (TAᵢ, TAₖ), sowie der Verlust der vorbestimmten Trägerfrequenz während der vorbestimmten Zeitdauer (TT9) beim vorgehenden Schritt erfaßt wird.

7. Unterbrechungssteuerungsverfahren nach Anspruch 5, **dadurch gekennzeichnet, daß** es folgend auf den Schritt (E3) der Übertragung des Empfangsbestätigungssignals (ACK) die Schritte umfaßt:
- Empfangen einer Datennachricht in Form einer MFV-Codefolge,
- Erfassen einer Ruhezeitdauer größer als eine vorbestimmte Zeitdauer entsprechend der Zeitdauer zwischen zwei aufeinanderfolgenden MFV-Codes, und
- Wiederherstellen der unterbrochenen Verbindung zwischen den ersten und zweiten Endgeräten, sobald die Ruhe beim vorgehenden Schritt erfaßt worden ist.

8. Unterbrechungssteuerungsverfahren nach einem beliebigen der Ansprüche 1 bis 7, **dadurch gekennzeichnet, daß** das Endgerätalarmsignal (SAT) ein Sinussignal umfaßt, das eine Frequenz aufweist, die etwa im Frequenzband der zwischen den ersten und zweiten Endgeräten (TAᵢ, TA_{K}) ausgetauschten Signale enthalten ist.

9. Verfahren, das in einem Gerät (C) ausgeführt wird, um vorübergehend eine zwischen ersten und zweiten Endgeräten (TAᵢ, TAₖ) hergestellte und das Gerät durchlaufende Verbindung zu unterbrechen, wobei das erste Endgerät (TAᵢ) das Verfahren zur Steuerung der Unterbrechung einer Verbindung nach einem beliebigen der Ansprüche 1 bis 8 ausführt,
wobei das Verfahren im Gerät die aufeinanderfolgenden Schritte umfaßt:
- Unterbrechen (INT1) der zwischen den ersten und zweiten Endgeräten hergestellten Verbindung,
- Übertragen eines Benutzeralarmsignals (SAU) vom Gerät zum ersten Endgerät (TAᵢ),
- Übertragen eines Endgerätalarmsignals (SAT) vom Gerät zum ersten Endgerät,
- Auslösen einer Warteverzögerungszeit (T1) eines Empfangsbestätigungssignals (ACK), das vom ersten Endgerät aus zum Gerät übertragen wird,
- Wiederherstellen der Verbindung zwischen den ersten und zweiten Endgeräten (TAᵢ, TAₖ) nach der Warteverzögerungszeit (T1), wenn das Gerät (C) das Empfangsbestätigungssignal (ACK) nicht empfängt, oder nach dem Empfang des Empfangsbestätigungssignals (ACK) und der Übertragung einer Datennachricht (MD) vom Gerät zum ersten Endgerät,
**dadurch gekennzeichnet, daß** es den Schritt umfaßt:
- Wiederherstellen der Verbindung zwischen den ersten und zweiten Endgeräten (TAᵢ, TAₖ) während einer vorbestimmten Zeitdauer (TC1) zwischen dem Schritt der Übertragung des Benutzeralarmsignals (SAU) und dem Schritt des Übertragens des Endgerätalarmsignals (SAT).

10. Verfahren nach Anspruch 9, **dadurch gekennzeichnet, daß** es den Schritt umfaßt:
Übertragen eines Ruhesignals mit einer Leistung kleiner als eine vorbestimmte Leistung während erster und zweiter vorbestimmter Ruhezeitdauern (TC2, T1), jeweils vorhergehend und folgend auf den Schritt der Übertragung des Endgerätalarmsignals (SAT).

11. Verfahren nach Anspruch 9 oder 10, **dadurch gekennzeichnet, daß** es den Schritt umfaßt:
Übertragen eines Ruhesignals mit einer Leistung kleiner als eine vorbestimmte Leistung während einer dritten vorbestimmten Zeitdauer (TC7) folgend auf die Übertragung der Datennachricht (MD).

## Claims

1. A method of controlling interruption of a call established via an analog link between first and second terminals (TAᵢ, TAₖ) via especially an equipment (C) through which the call passes, which causes the interruption (INT2), said method being implemented in the first terminal (TAᵢ), **characterized in that** it comprises a step (E26, E203) of searching during a predetermined search time (TT6, TV2) for a pattern (M1) transmitted by the equipment (C) comprising in succession:
a first silence signal during a predetermined first period of silence (TT3),
a terminal alerting signal (SAT) transmitted by the equipment (C), and
a second silence signal during a predetermined second period of silence (TT5),
each of the first and second silence signals having a power less than the lowest power level in any signals exchanged between the first and second terminals within the frequency band of said exchanged signals.

2. The interruption control method according to claim 1, wherein the equipment (C) interrupts the established call to transmit a user alerting signal (SAU) before the terminal alerting signal (SAT),
**characterized in that** it comprises the steps of:
- registering (E1) the interruption of the established call,
- verifying (E22) initialization of an intermediate time-delay (TT1) following the previous registering step,
- searching (E231) during a predetermined period (DP1) for the user alerting signal (SAU) transmitted by the equipment (C) if the intermediate time-delay (TT1) is not initialized,
- searching (E232) for a signal modulating a predetermined carrier frequency transmitted by the second terminal during a predetermined period (DP2) after the searched for user alerting signal (SAU) has been detected, and
- initializing (E234) the intermediate time-delay (TT1) when the signal modulating the predetermined carrier frequency has been detected and clearing down (E233) the established call if the searched for signal modulating the carrier frequency is not detected,
the step (E26) of searching for the pattern being effected only after the loss of the signal modulating the predetermined carrier frequency is registered during the initialized intermediate time-delay (TT1).

3. An interruption control method according to claim 1, **characterized in that** it comprises, before the step (E203) of searching for the pattern, the steps of:
- receiving (E201) a user alerting signal (SAU), and
- initializing (E202) a time-delay (TV2) corresponding to the predetermined search period.

4. An interruption control method according to claim 2, **characterized in that** it comprises the step (E21) of initializing a disconnection time-delay (TD) before the steps (E231, E26) of searching for the user alerting signal (SAU) and searching for the pattern (M1), said disconnection time-delay (TD) being a maximum period of loss of the signal modulating the predetermined carrier frequency beyond which the first terminal (TAᵢ) clears down the established call, and **in that** after the disconnection time-delay the first terminal (TAᵢ) reestablishes the call with the second terminal (TAₖ) if the signal modulating the predetermined carrier frequency is found and if no user alerting signal (SAU) and no pattern (M1) is detected (E264, E232, E235).

5. An interruption control method according to any one of claims 1 to 4, **characterized in that** it comprises the step (E3) of transmitting an acknowledgment signal (ACK) by the first terminal (TAᵢ) when said pattern (M1) has been detected in the step (E26) of searching for the pattern (M1).

6. An interruption control method according to claim 5, **characterized in that** it comprises, in succession after the step (E3) of transmitting the acknowledgment signal (ACK), the steps of:
- searching (E43) for a predetermined carrier frequency transmitted by the equipment (C),
- receiving (E53) a data message (MD) transmitted by the equipment (C) if the predetermined carrier frequency is found during a predetermined period (TR),
- searching (E54) for loss of the predetermined carrier frequency during a predetermined period (TT9) after the message (MD) is received, and
- re-establishing (E6) the interrupted call between the first and second terminals (TAᵢ, TAₖ) as soon as the loss of the predetermined carrier frequency is detected during the predetermined period (TT9) in the preceding step.

7. An interruption control method according to claim 5, **characterized in that** it comprises, in succession after the step (E3) of transmitting the acknowledgment signal (ACK), the steps of:
- receiving a data message in the form of a series of DTMF codes,
- detecting silence lasting longer than a predetermined period corresponding to the time between two successive DTMF codes, and
- re-establishing the interrupted call between the first and second terminals as soon as the silence is detected in the preceding step.

8. The interruption control method according to any one of claims 1 to 7, **characterized in that** the terminal alerting signal (SAT) comprises a sinusoidal signal having a frequency substantially within the frequency band of the signals exchanged between the first and second terminals (TAᵢ, TAₖ).

9. A method executed in an equipment (C) to interrupt temporarily an established call between first and second terminals (TAᵢ, TAₖ) passing through said equipment, the first terminal (TAᵢ) implementing the call interruption control method according to any one of claims 1 to 8,
said method comprising in the equipment the successive steps of:
- interrupting (INT1) the established call between the first and second terminals,
- transmitting a user alerting signal (SAU) from the equipment to the first terminal (TAᵢ),
- transmitting a terminal alerting signal (SAT) from the equipment to the first terminal,
- initializing a time-delay (T1) to wait for an acknowledgment signal (ACK) transmitted from the first terminal to the equipment, and
- re-establishing the call between the first and second terminals (TAᵢ, TAₖ) after the waiting time-delay (T1) if the equipment (C) does not receive the acknowledgment signal (ACK) or after reception of the acknowledgment signal (ACK) and transmission of a data message (MD) from the equipment to the first terminal,
**characterized in that** it comprises the step of :
- re-establishing the call between the first and second terminals (TAᵢ, TAₖ) during a predetermined period (TC1) between the step of transmitting the user alerting signal (SAU) and the step of transmitting the terminal alerting signal (SAT).

10. Method according to claim 9 **characterized in that** it comprises the step of :
transmitting a silence signal with a power less than a predetermined power during first and second predetermined periods of silence (TC2, T1) respectively preceding and succeeding the step of transmitting the terminal alerting signal (SAT).

11. Method according to claim 9 or 10 **characterized in that** it includes the step of:
transmitting a silence signal with a power less than a predetermined power during a third predetermined period (TC7) after transmission of the data message (MD).
